# EUROPÄISCHE PATENTSCHRIFT

(11) **EP 3 746 762 B1**
(45) Veröffentlichungstag und Bekanntmachung des Hinweises auf die Patenterteilung: **01.12.2021**
(21) Anmeldenummer: 19701538.1
(22) Anmeldetag: 31.01.2019
(51) Int. Cl.: G01N 3/12, G01N 3/32, G01M 5/00, F17C 1/00, F17C 5/06, G01M 3/36

(54) **PRÜFVORRICHTUNG UND VERFAHREN ZUR LASTWECHSELPRÜFUNG**
APPARATUS AND METHOD FOR PRESSURE TESTING
DISPOSITIF ET PROCÉDÉ D'ESSAI DE PRESSION

(30) Priorität: 31.01.2018 EP 18154376
(43) Veröffentlichungstag der Anmeldung: 09.12.2020
(73) Patentinhaber: Maximator Gmbh, 99734 Nordhausen (DE)
(72) Erfinder: ADLER, Robert, 1030 Wien (AT); FAHRTHOFER, Georg, 1030 Wien (AT); GRUBER, Sarah, 1030 Wien (AT); NAGL, Christoph, 1030 Wien (AT); RASCH, Markus, 1030 Wien (AT); STEPHAN, Markus, 1030 Wien (AT)
(74) Vertreter: SONN Patentanwälte OG
(86) Internationale Anmeldenummer: PCT/EP2019/052309
(87) Internationale Veröffentlichungsnummer: WO 2019/149790

(56) Entgegenhaltungen:
- CN-A- 101 403 669
- CN-A- 101 881 714
- GB-A- 2 185 581

## Beschreibung

Die Erfindung betrifft ein Verfahren zur Lastwechselprüfung eines Druckgasspeichers.

Aufgrund des erheblichen Gefährdungspotentials werden Druckgasspeicher umfassenden zerstörenden und zerstörungsfreien Prüfungen unterzogen, bei welchen die Prüflinge von innen mit dem Druckmedium auf Prüfdruck beaufschlagt werden. Beim Stand der Technik wird anschließend der Druckgasspeicher entlastet, indem das Druckmedium abgelassen wird. Pro Prüfzyklus wird ein Befüllsowie ein Entlastungsvorgang durchgeführt. Bei der Lastwechselprüfung können Dehnmessstreifen eingesetzt werden. Bei den Dehnmessstreifen wird ausgenutzt, dass sich der Widerstand des Dehnmessstreifens bei einer Längenänderung des damit verbundenen Prüflings ändert. Somit können mechanische Spannungen erfasst werden.

Die CN 101 881 714 A offenbart eine Prüfvorrichtung zur Druckprüfung von Gasflaschen, wobei ein externes Messverfahren mit einem variablen Volumen verwendet wird. Dabei befindet sich die Gasflasche in einem Prüfdruckbehälter, wobei die Gasflasche und der Prüfdruckbehälter über Leitungen mit einem Medium wie beispielsweise Wasser befüllt werden. Über eine Pumpe wird das Medium auf einen höheren Druck gebracht und in die Gasflasche eingespeist, wodurch sich die Gasflasche ausdehnt. Damit der Druck im Zwischenraum zwischen dem Prüfdruckbehälter und der Gasflasche konstant bleibt, dehnt sich das Medium, das sich in diesem Zwischenraum befindet, in einen mit dem Zwischenraum verbundenen Zylinder aus, indem es einen Kolben in dem Zylinder wegdrückt.

Weitere Prüfsysteme für Gasbehälter sind in der CN 101 403 669 A und in der GB 2 185 581 A beschrieben.

Nachteilig ist jedoch, dass die Lastwechselprüfung von Druckgasspeichern bisher je nach Speichervolumen, Druck und Medium eine verhältnismäßig lange Zeit in Anspruch nehmen kann. Durch die thermodynamischen Vorgaben des jeweiligen Mediums und die zulässigen Einsatztemperaturen des Druckgasspeichers ergibt sich eine Mindestdauer für jeden Prüfzyklus. Ferner wird vielfach eine Testtemperatur in einem gewissen Toleranzbereich vorgeschrieben.

In diesem Fall erhöhen sich der Aufwand und die Prüfzykluszeit bedeutend.

Vor allem bei Serienbauteilen mit hohen Ansprüchen an Druck und Speichervolumen, wie beispielsweise bei Druckgasspeichern von Fahrzeugen, insbesondere Wasserstofffahrzeugen, führen steigende Produktionszahlen zu einer Zunahme der durchzuführenden Prüfungen. Eine Reduktion des zeitlichen Aufwands für den Prüfzyklus ist daher wünschenswert.

Demnach besteht die Aufgabe der vorliegenden Erfindung darin, zumindest einzelne Nachteile des Standes der Technik zu lindern oder zu beseitigen. Die Erfindung setzt sich insbesondere zum Ziel, die Zeitdauer für die Durchführung der Lastwechselprüfung zu verkürzen und die Einhaltung der Prüfbedingungen zu erleichtern.

Diese Aufgabe wird durch ein Verfahren mit den Merkmalen von Anspruch 1 gelöst.

Bei dem erfindungsgemäßen Verfahren werden zumindest die folgenden Schritte durchgeführt:
i. Anordnen des zu prüfenden Druckgasspeichers innerhalb eines Prüfbehälters;
ii. Erhöhen des Drucks eines Druckgases im Druckgasspeicher auf einen Prüfdruck;
iii. Messen einer elastischen Verformung des Druckgasspeichers, welche durch den Prüfdruck des Druckgases hervorgerufen wird;
iv. Erhöhen des Drucks eines Druckmediums im Prüfbehälter, so dass die elastische Verformung des Druckgasspeichers durch den Druck des Druckmediums auf den Druckgasspeicher reduziert wird;
v. Absenken des Drucks des Druckmediums im Prüfbehälter;
vi. Wiederholen der Schritte iii. bis v.

Demnach wird zur Rückbildung der elastischen Verformung des Druckgasspeichers beim Lastwechsel der äußere Druck auf den Druckgasspeicher durch das Druckmedium erhöht. Vorteilhafterweise kann der vom Druckgas auf den Druckgasspeicher ausgeübte innere Druck durch den vom Druckmedium auf den Druckgasspeicher ausgeübten äußeren Druck ausgeglichen werden. Bei diesem Verfahren ist es somit nicht erforderlich, den Prüfdruck des Druckgases während der Lastwechselprüfung zu senken. Demnach können die Schritte iii. bis v. des zuvor beschriebenen Verfahrens bei gleichbleibendem Prüfdruck des Druckgases durchgeführt werden. Vorteilhafterweise kann so die Dauer der Lastwechselprüfung wesentlich verkürzt werden. Aufgrund der Anordnung des Prüfbehälters im vorzugsweise flüssigen Druckmedium werden zudem Temperatureinflüsse und andere externe Störgrößen erheblich reduziert. Somit können in kürzerer Zeit präzisere Lastwechselprüfungen durchgeführt werden.

Um den Lastwechsel präzise vorzubereiten ist es günstig, wenn der Druck des Druckmediums im Prüfbehälter so lange erhöht wird, bis eine im Wesentlichen vollständige Rückbildung der elastischen Verformung des Druckgasspeichers gemessen wird. Bei dieser Ausführung wird daher direkt die Rückbildung der elastischen Verformung durch den Druck des Druckmediums gemessen, um den Abschluss eines Lastwechsels festzustellen.

Bei einer alternativen, messtechnisch besonders einfachen Ausführungsvariante wird der Druck des Druckmediums im Prüfbehälter so lange erhöht, bis der Druck des Druckmediums im Prüfbehälter im Wesentlichen dem Prüfdruck des Druckgases im Druckgasspeicher entspricht. Bei dieser Ausführungsvariante wird daher der Ausgangszustand des Prüfbehälters dadurch angenähert, dass der Druck des Druckmediums im Prüfbehälter während der Druckerhöhung gemessen und laufend mit dem Prüfdruck des Druckgases im Druckgasspeicher verglichen wird. Wenn der Druck des Druckmediums im Prüfbehälter den Prüfdruck des Druckgases im Druckgasspeicher erreicht, wird der Lastwechsel als abgeschlossen betrachtet. Danach kann der Druck des Druckmediums im Prüfbehälter wiederum abgesenkt werden, um den nächsten Lastwechsel einzuleiten.

Hinsichtlich einer gleichmäßigen Druckbeaufschlagung des Prüfbehälters bei der Lastwechselprüfung ist es günstig, wenn der zu prüfende Druckgasspeicher in dem Prüfbehälter allseitig von dem Druckmedium umgeben wird. Demnach kann die Außenseite des Prüfbehälters gleichförmig mit dem Druck des Druckmediums beaufschlagt werden. Somit kann der Druckgasspeicher denselben Belastungen wie bei herkömmlichen Lastwechselprüfungen, mit wechselnder Befüllung und Entleerung des Druckgasspeichers, unterzogen werden, ohne jedoch die damit einhergehenden Nachteile, insbesondere hinsichtlich des Zeitaufwands, in Kauf nehmen zu müssen.

Zur exakten Bestimmung des Dehnzustands des Druckgasspeichers ist es von Vorteil, wenn die elastische Verformung des Druckgasspeichers mit zumindest einem, vorzugsweise mit zumindest zwei, besonders bevorzugt mit drei, Dehnmessstreifen an dem Druckgasspeicher erfasst wird. Dehnungsmessstreifen sind Messelemente zur Erfassung von dehnenden und stauchenden Verformungen. Bei Verformungen wird eine Änderung des elektrischen Widerstands erfasst. Der zumindest eine Dehnmessstreifen wird auf der Wandung des Druckgasspeichers angeordnet, beispielsweise verklebt.

Zur groben Abschätzung des Dehnzustands des Druckgasspeichers ist es weiters günstig, wenn ein in den Prüfbehälter zufließendes Durchflussvolumen des Druckmediums und/oder ein aus dem Prüfbehälter abfließendes Durchflussvolumen des Druckmediums gemessen wird, um eine Volumenänderung des Druckgasspeichers aus dem zu- bzw. abfließenden Durchflussvolumen des Druckmediums festzustellen. Demnach ermöglicht die Erfassung des Durchflussvolumens eine (grobe) Abschätzung der Volumenänderung des Druckgasspeichers aufgrund des Druckgases.

Bei dieser Ausführungsvariante werden bevorzugt die weiteren Schritte:
- Vergleichen der Volumenänderung des Druckgasspeichers mit einem Referenzwert und
- Feststellen eines Fehlers des Druckgasspeichers, wenn die Volumenänderung des Druckgasspeichers den Referenzwert übersteigt
   durchgeführt.

Zur präzisen Druckbeaufschlagung des Druckgasspeichers von außen ist das Druckmedium bevorzugt im Wesentlichen inkompressibel, wobei als Druckmedium bevorzugt Wasser, eine Flüssigkeit mit einem Wassergehalt von mehr als 5 Volumenprozent und weniger als 100 Volumenprozent, insbesondere von 20 Volumenprozent bis 60 Volumenprozent, oder eine Hydraulikflüssigkeit verwendet wird.

Um gleichbleibende Bedingungen für die Lastwechselprüfung sicherzustellen, ist es günstig, wenn die Temperatur des Druckgasspeichers mit einer Temperiereinheit eingestellt wird. Bevorzugt wird die Temperatur des Druckmediums im Prüfbehälter eingestellt. Dadurch können die gewünschten Temperaturverhältnisse besonders präzise eingehalten werden.

Das zuvor beschriebene Verfahren zur Lastwechselprüfung eignet sich insbesondere für Druckgasspeicher, bei welchen der Prüfdruck des Druckgases im Druckgasspeicher von 5 bar bis 2500 bar, insbesondere von 500 bar bis 1800 bar, insbesondere von 900 bar bis 1500 bar, beträgt. Dementsprechend wird der Druck des Druckmediums im Prüfbehälter auf denselben Druckwert angehoben, um die durch den Prüfdruck resultierende Materialspannung des Druckgasspeichers möglichst auszugleichen.

Eine Prüfvorrichtung zur Druckprüfung von Druckgasspeichern, die nicht Teil der vorliegenden Erfindung ist, weist zumindest die folgenden Komponenten auf:
- einen zu prüfenden Druckgasspeicher;
- einen Prüfbehälter, in welchem der zu prüfende Druckgasspeicher aufgenommen ist;
- eine Druckgaszuleitung zum Befüllen des Druckgasspeichers mit Druckgas;
- eine Druckmediumzuleitung zum Befüllen des Prüfbehälters mit einem Druckmedium;
- ein Messelement zum Messen einer elastischen Verformung des Druckgasspeichers;
- ein Druckmessgerät zum Erfassen des Drucks des Druckgases im Druckgasspeicher,
- eine Einrichtung zum Erhöhen des Drucks des Druckmediums im Prüfbehälter, wobei ein Prüfdruck des Druckgases im Druckgasspeicher von 5 bar bis 2500 bar, insbesondere von 500 bar bis 1800 bar, insbesondere von 900 bar bis 1500 bar, beträgt.

Die Vorteile und Effekte dieser Prüfvorrichtung ergeben sich aus dem zuvor geschilderten Verfahren, so dass auf Wiederholungen verzichtet werden soll.

Die Einrichtung zum Erhöhen des Drucks des Druckmediums im Prüfbehälter weist bevorzugt eine Hochdruckpumpe auf, welche in verschiedensten Ausführungen im Stand der Technik verfügbar ist.

Um gleichbleibende Prüfbedingungen zu erreichen, weist die Prüfvorrichtung bevorzugt eine Temperiereinheit zur Einstellung einer Temperatur des zu prüfenden Druckgasspeichers auf. Bevorzugt weist die Temperiereinheit ein Heiz- und/oder Kühlelement zum Heizen und/oder Kühlen des Druckmediums im Prüfbehälter auf. Beispielsweise kann als Heiz- und/oder Kühlelement eine medienführende Leitung vorgesehen sein, welche durch das Innere des Prüfbehälters führt.

Um je nach Phase des Lastwechsels den Zu- oder Abfluss des Druckmediums aus dem Prüfbehälter zu ermöglichen, weist die Prüfvorrichtung bei einer bevorzugten Ausführungsform eine erste Druckmediumableitung zur Ableitung des Druckmediums vom Prüfbehälter und eine zwischen einer Offenstellung und einer Schließstellung umschaltbare Ventilvorrichtung in der ersten Druckmediumableitung auf.

Gemäß einer weiteren bevorzugten Ausführungsform ist zudem eine Durchflussmesseinrichtung zur Bestimmung des in den Prüfbehälter zufließenden und/oder aus dem Prüfbehälter abfließenden Durchflussvolumen des Druckmediums vorgesehen.

Gemäß einer bevorzugten Ausführungsform weist die Einrichtung zum Erhöhen des Drucks des Druckmediums im Prüfbehälter einen Antrieb, einen mit dem Antrieb verbundenen Kolben und ein Gehäuse mit einem mit dem Prüfbehälter verbundenen Innenraum auf, wobei der Kolben im Innenraum des Gehäuses um einen Hub verschieblich ist, um den Druck des Druckmediums im Prüfbehälter (je nach Bewegungsrichtung des Kolbens) zu erhöhen oder abzusenken.

Zum Abschluss der Lastwechselprüfung weist die Prüfvorrichtung bevorzugt
- eine zweite Druckmediumableitung zur Ableitung des Druckmediums vom Prüfbehälter;
- eine zwischen einer Offenstellung und einer Schließstellung umschaltbare weitere Ventilvorrichtung in der zweiten Druckmediumableitung; und
- eine Pumpeinrichtung in der zweiten Druckmediumableitung zum Abpumpen des Druckmediums aus dem Prüfbehälter auf. Die Pumpeinrichtung weist bevorzugt eine Niederdruckpumpe auf.

Die Erfindung wird durch die Ansprüche 1-10 definiert.

Die Zeichnungen zeigen weitere Beispiele, die nicht Teil der vorliegenden Erfindung sind.
Fig. 1 zeigt ein Funktionsschema einer Prüfvorrichtung, die nicht Teil der vorliegenden Erfindung ist, zur Lastwechselprüfung eines Druckgasspeichers.
Fig. 2 zeigt eine bevorzugte Ausgestaltung einer Hochdruckpumpe für die Prüfvorrichtung gemäß Fig. 1.

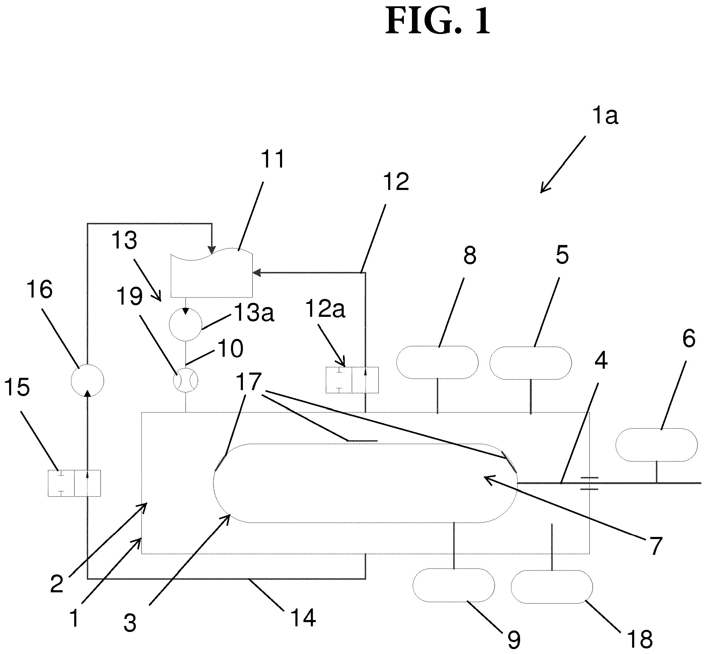

In Fig. 1 ist eine Ausführungsform einer Prüfvorrichtung 1a zur Durchführung von Lastwechselprüfungen gezeigt. Die Prüfvorrichtung 1a weist einen druckfesten Prüfbehälter 1 auf, welcher mit einem im Wesentlichen inkompressiblen, flüssigen Druckmedium 2 unter Druck befüllt werden kann. Im Inneren des Prüfbehälters 1 wird ein zu prüfender Druckgasspeicher 3 aufgenommen. Der druckfeste Prüfbehälter 1 kann geöffnet und geschlossen werden, so dass der zu prüfende Druckgasspeicher 3 eingesetzt und entnommen werden kann. Der Druckgasspeicher 3 beinhaltet ein Druckgas 7. Das Druckmedium 2 kann Wasser, eine Flüssigkeit mit einem Wasseranteil von 5 % bis weniger als 100 %, insbesondere von 20 % bis 60 % oder eine Hydraulikflüssigkeit auf Mineralölbasis sein. Das Druckgas 7 ist vorzugsweise ein gasförmiges Fluid, insbesondere ein Inertgas oder Brenngas, insbesondere Stickstoff, Helium, Erdgas, insbesondere Wasserstoff, ferner verdichtete Luft oder Sauerstoff. Der druckfeste Prüfbehälter 1 ist für einen Druck von 5 bar bis 2500 bar, vorzugsweise von 500 bar bis 1800 bar, insbesondere von 900 bar bis 1500 bar, ausgelegt. Der Prüfdruck im Druckgasspeicher 3 beträgt von 5 bar bis 2500 bar, vorzugsweise von 500 bar bis 1800 bar, insbesondere von 900 bar bis 1500 bar.

Wie aus Fig. 1 weiters ersichtlich, weist die Prüfvorrichtung 1a eine durch den druckfesten Prüfbehälter 1 zum Druckgasspeicher 3 führende Druckgaszuleitung 4 auf, mit welcher der Druck des Druckgases 7 im Druckgasspeicher 3 eingestellt werden kann. Ein erstes Druckmessgerät 5 erfasst den Druck des Druckmediums 2 im druckfesten Prüfbehälter 1. Ein zweites Druckmessgerät 6 erfasst den Druck des Druckgases 7 im Druckgasspeicher 3. Ein erstes Temperaturmessgerät 8 erfasst die Temperatur des Druckmediums 2 im druckfesten Prüfbehälter 1. Ein zweites Temperaturmessgerät 9 erfasst die Temperatur des Druckgasspeichers 3. Eine Druckmediumzuleitung 10 verbindet den druckfesten Prüfbehälter 1 mit einem Druckmediumspeicher 11. Weiters ist eine erste Druckmediumableitung 12 vorgesehen, welche den Prüfbehälter 1 mit dem Druckmediumspeicher 11 verbindet. In der ersten Druckmediumableitung 12 ist eine Ventilvorrichtung 12a vorgesehen, mit welchem der Rückfluss des Druckmediums 2 vom Prüfbehälter 1 in den Druckmediumspeicher 11 selektiv freigegeben und unterbrochen werden kann. Zudem kann hiermit der Prüfbehälter entlüftet werden. Der Druckmediumspeicher 11 beinhaltet das Druckmedium 2 und liegt auf Atmosphärendruck. Die Prüfvorrichtung 1a weist zudem in der Druckmediumzuleitung 10 eine Einrichtung 13 zum Erhöhen des Drucks des Druckmediums 2 im Prüfbehälter 1 auf. Als Einrichtung 13 ist in der gezeigten Ausführungsform eine Hochdruckpumpe 13a vorgesehen, mit welcher der Druck des Druckmediums 2 im Prüfbehälter 1 erhöht werden kann. Eine zweite Druckmediumableitung 14 verbindet den Prüfbehälter 1 mit dem Druckmediumspeicher 11, wobei die Druckmediumableitung 14 durch eine weitere Ventilvorrichtung 15 selektiv freigegeben und unterbrochen werden kann. Eine Pumpeinrichtung mit einer Niederdruckpumpe 16 ermöglicht die Entleerung des druckfesten Prüfbehälters 1, indem das Druckmedium 2 in den Druckmediumspeicher 11 geführt wird.

Wie aus Fig. 1 weiters ersichtlich, ist der Druckgasspeicher 3 in der gezeigten Ausgestaltung an wenigstens einer Stelle, bevorzugt jedoch an drei bis fünf voneinander entfernten Stellen, vorzugsweise an genau drei Stellen, mit jeweils einem Messelement 17 versehen, mit welchem lokale Längenänderungen der Wandung des Druckgasspeichers 3 erfasst werden. Das Messelement 17 ist vorzugsweise als Dehnmessstreifen zur Erfassung von Längenänderungen ausgeführt. Als Referenzwert für die Längenänderung wird jene Messgröße herangezogen, die am Druckgasspeicher 3 im drucklosen Zustand ermittelt wird. Eine Temperiereinheit 18 erlaubt eine Einflussnahme auf die Temperatur des Druckgasspeichers 3 durch Heizen und/oder Kühlen des Druckmediums 2 im Prüfbehälter 1. Eine Durchflussmesseinrichtung 19 misst das Durchflussvolumen des in den Prüfbehälter 1 geförderten Druckmediums 2. Der Messwert für das Durchflussvolumen des Druckmediums 2 kann mit einem Referenzwert verglichen werden, um ein atypisches Verhalten des zu prüfenden Druckgasspeichers 3 festzustellen.

Zum Zweck der Lastwechselprüfung wird der Druckgasspeicher 3 im Inneren des druckfesten Prüfbehälters 1 angeordnet, welcher mit dem Druckmedium befüllt wird. Anschließend wird der Druckgasspeicher 3 von innen mit dem Druckgas 7 druckbeaufschlagt, bis das Druckgas 7 den gewünschten Prüfdruck im Druckgasspeicher 3 erreicht. Durch die Druckbeaufschlagung des Druckgasspeichers 3 wird eine elastische Verformung der Wandung des Druckgasspeichers 3 bewirkt, welche mit den Messelementen 17 erfasst wird. Die Längenänderung ist umso größer, je höher die Druckdifferenz zwischen Druckmedium 2 und Druckgas 7 ist. Im drucklosen Zustand des Druckmediums 2 (d.h. im ausgeschalteten Zustand der Hochdruckpumpe 13a) erreicht die Längenänderung des Druckgasspeichers 3 einen Maximalwert. In der gezeigten Ausführungsform wird anschließend der Druck des inkompressiblen Druckmediums 2 erhöht, so dass der Druckgasspeicher 3 auf der Oberfläche mit (zusätzlichem) Druck beaufschlagt wird. Zu diesem Zweck werden die Ventilvorrichtung 12a in der ersten Druckmediumableitung 12 und die weitere Ventilvorrichtung 15 in der zweiten Druckmediumableitung 14 jeweils in die Schließstellung geschalten während die Hochdruckpumpe 13a aktiv ist, so dass der Druck des Druckmediums 2 innerhalb des Prüfbehälters 1 kontinuierlich erhöht wird. Durch den von außen auf den Druckgasspeicher 3 ausgeübten Druck wird die Längenänderung verglichen zum Maximalwert reduziert, wobei die Messgrößen der Messelemente 17 so nahe als möglich an den vorab ermittelten Urzustand angenähert werden. Im hypothetischen Idealfall wird der Urzustand ohne Abweichung erreicht. In der Praxis sind jedoch bedingt durch Messfehler, Fertigungstoleranzen etc. Abweichungen unvermeidlich, welche beispielsweise weniger als 20 %, insbesondere weniger als 10 %, vorzugsweise weniger als 3 %, betragen. Zur Druckentlastung wird die Ventilvorrichtung 12a geöffnet, wodurch der Druckwert des ersten Druckmessgeräts 5 auf Atmosphärendruck absinkt. Entsprechend der gewünschten Zykluszahl wird der Vorgang der Druckanhebung und -entlastung viele Male, beispielsweise mehr als 100 Mal, insbesondere mehr als 500 Mal, wiederholt. Nach Abschluss der Lastwechselprüfung wird die weitere Ventilvorrichtung 15 geöffnet. Mittels der Niederdruckpumpe 16 wird das Druckmedium 2 aus dem druckfesten Prüfbehälter 1 in den Medienspeicher 11 abgepumpt. Der Druckgasspeicher 3 kann anschließend aus dem entleerten Prüfbehälter 1 entfernt werden, woraufhin die Prüfvorrichtung 1a für die Lastwechselprüfung des nächsten Druckgasspeichers 3 zur Verfügung steht.

In einer weiteren Ausführungsform wird der Druck des Druckmediums 2 zur Rückbildung der elastischen Verformung des Druckgasspeichers 3 so lange erhöht, bis der Druckwert am ersten Druckmessgerät 5 im Wesentlichen dem Prüfdruck am zweiten Druckmessgerät 6 entspricht.

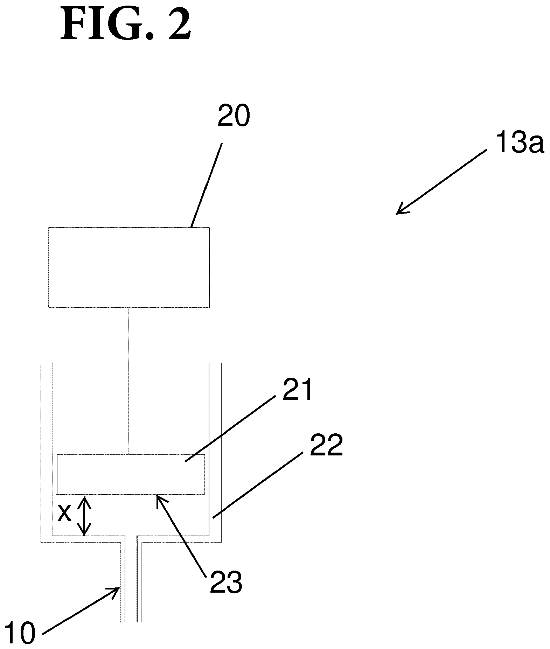

In Fig. 2 ist eine besondere Ausgestaltung der Hochdruckpumpe 13a dargestellt. Die Hochdruckpumpe 13a weist einen Antrieb 20 auf. Dieser Antrieb 20 wirkt auf einen Kolben 21, der in der gezeigten Ausführung über die Druckmediumzuleitung 10 mit dem Prüfbehälter 1 verbunden ist. Die Hochdruckpumpe 13a kann direkt am Prüfbehälter 1 verbaut sein. Der Antrieb 20 ist insbesondere als mechanischer Antrieb, pneumatischer, elektrischer oder hydraulischer Antrieb ausgeführt. Der Kolben 21 ist beweglich im Innenraum eines Gehäuses 22 angeordnet. Wenn der Kolben 21 um einen Hub x verschoben wird, wirkt eine Kolbenfläche 23 des Kolbens 21 auf das Arbeits- bzw. Druckmedium 2 im Prüfbehälter 1. Das Verdrängungsvolumen des Kolbens 21 wird durch das Produkt aus Kolbenfläche 23 und Hub x gebildet. Bei der zyklischen Lastwechselprüfung des Druckgasspeichers 3 wird durch die Variation des Hubs x die erforderliche Volumenänderung für den Druckgasspeicher 3 erwirkt. Wird der Hub x verkleinert, erhöht sich entsprechend der Druck des Druckmediums 2 im Prüfbehälter 1, wodurch die mechanischen Spannungen im Druckgasspeicher 3 verringert werden. Wenn der Hub x des Kolbens 21 im nächsten Schritt vergrößert wird, sinkt der Außendruck auf den Druckgasspeicher 3, so dass die mechanischen Spannungen im Druckgasspeicher 3 erhöht werden.

### Ausführungsbeispiel:

In einem Ausführungsbeispiel soll ein Druckbehälter 3 in Form eines Wasserstofftanks für ein Kraftfahrzeug über 1000 Zyklen mit einer Lastschwingbreite von 0 bis 1000 bar mit Wasserstoff belastet werden. Entsprechend wird der Druck des Wasserstoffs auf den Prüfdruck von 1000 bar erhöht. Anschließend wird der von außen durch das Druckmedium 2 auf den Druckgasspeicher 3 ausgeübte Druck angehoben, bis die Längenänderung am Druckgasspeicher 3 ein Minimum ergibt. Danach wird der Druck vom Druckmedium 2 auf den Druckgasspeicher 3 auf Atmosphärendruck abgesenkt. Dieser Vorgang wird 1000 Mal durchgeführt.

Dieses Prüfverfahren kann beispielsweise bei der Produktion von Wasserstoff-Fahrzeugtanks eingesetzt werden, wobei beispielsweise jeder 200. Wasserstoff-Fahrzeugtank mit 1000 Volllastwechseln geprüft wird. Die Gesamtprüfdauer kann dabei gegenüber dem Stand der Technik wesentlich reduziert werden.

Die Prüfvorrichtung 1 ist darüber hinaus für die Durchführung von Berstversuchen besonders gut geeignet. Dabei wird durch die Druckgaszuleitung 4 der Druck im Druckgasspeicher 3 so lange erhöht, bis der Druckgasspeicher 3 birst. Der Prüfbehälter 1 mit dem Druckmedium 2 dient dabei als Abschirmung, so dass die Sicherheit wesentlich erhöht wird.

## Patentansprüche

1. Verfahren zur Lastwechselprüfung eines Druckgasspeichers (3) mit den Schritten:
i. Anordnen des zu prüfenden Druckgasspeichers (3) innerhalb eines Prüfbehälters (1);
ii. Erhöhen des Drucks eines Druckgases (7) im Druckgasspeicher (3) auf einen Prüfdruck;
iii. Messen einer elastischen Verformung des Druckgasspeichers (3), welche durch den Prüfdruck des Druckgases (7) hervorgerufen wird;
iv. Erhöhen des Drucks eines Druckmediums (2) im Prüfbehälter (1), so dass die elastische Verformung des Druckgasspeichers (3) durch den Druck des Druckmediums (2) auf den Druckgasspeicher (3) reduziert wird;
v. Absenken des Drucks des Druckmediums (2) im Prüfbehälter (1) ;
vi. Wiederholen der Schritte iii. bis v.

2. Verfahren nach Anspruch 1, **dadurch gekennzeichnet, dass** der Druck des Druckmediums (2) im Prüfbehälter (1) so lange erhöht wird, bis eine im Wesentlichen vollständige Rückbildung der elastischen Verformung des Druckgasspeichers (3) gemessen wird.

3. Verfahren nach Anspruch 1, **dadurch gekennzeichnet, dass** der Druck des Druckmediums (2) im Prüfbehälter (1) so lange erhöht wird, bis der Druck des Druckmediums (2) im Prüfbehälter (1) im Wesentlichen dem Prüfdruck des Druckgases (7) im Druckgasspeicher (3) entspricht.

4. Verfahren nach einem der Ansprüche 1 bis 3, **dadurch gekennzeichnet, dass** der zu prüfende Druckgasspeicher (3) in dem Prüfbehälter (1) allseitig von dem Druckmedium (2) umgeben wird.

5. Verfahren nach einem der Ansprüche 1 bis 4, **dadurch gekennzeichnet, dass** die elastische Verformung des Druckgasspeichers (3) mit zumindest einem, vorzugsweise mit zumindest zwei, besonders bevorzugt mit drei, Dehnmessstreifen an dem Druckgasspeicher (3) erfasst wird.

6. Verfahren nach einem der Ansprüche 1 bis 5, **dadurch gekennzeichnet, dass** ein in den Prüfbehälter (1) zufließendes Durchflussvolumen des Druckmediums (2) und/oder ein aus dem Prüfbehälter (1) abfließendes Durchflussvolumen des Druckmediums (2) gemessen wird, um eine Volumenänderung des Druckgasspeichers (3) aus dem zu- bzw. abfließenden Durchflussvolumen des Druckmediums (2) festzustellen.

7. Verfahren nach Anspruch 6, **gekennzeichnet durch** die weiteren Schritte:
- Vergleichen der Volumenänderung des Druckgasspeichers (3) mit einem Referenzwert;
- Feststellen eines Fehlers des Druckgasspeichers (3), wenn die Volumenänderung des Druckgasspeichers (3) den Referenzwert übersteigt.

8. Verfahren nach einem der Ansprüche 1 bis 7, **dadurch gekennzeichnet, dass** das Druckmedium (2) im Wesentlichen inkompressibel ist, wobei als Druckmedium bevorzugt Wasser, eine Flüssigkeit mit einem Wassergehalt von mehr als 5 Volumenprozent und weniger als 100 Volumenprozent, insbesondere von 20 Volumenprozent bis 60 Volumenprozent, oder eine Hydraulikflüssigkeit verwendet wird.

9. Verfahren nach einem der Ansprüche 1 bis 8, **dadurch gekennzeichnet, dass** die Temperatur des Druckgasspeichers (3) mit einer Temperiereinheit (18) eingestellt wird.

10. Verfahren nach einem der Ansprüche 1 bis 9, **dadurch gekennzeichnet, dass** der Prüfdruck des Druckgases (7) im Druckgasspeicher (3) von 5 bar bis 2500 bar, insbesondere von 500 bar bis 1800 bar, insbesondere von 900 bar bis 1500 bar, beträgt.

## Claims

1. Method for testing the load change of a compressed gas accumulator (3) comprising the following steps:
arranging the compressed gas accumulator (3) to be tested within a test container (1);
increasing the pressure of a compressed gas (7) in the compressed gas accumulator (3) to a test pressure;
measuring an elastic deformation of the compressed gas accumulator (3) which is caused by the test pressure of the compressed gas (7);
increasing the pressure of a pressure medium (2) in the test container (1) so that the elastic deformation of the compressed gas accumulator (3) is reduced by the pressure of the pressure medium (2) on the compressed gas accumulator (3);
lowering the pressure of the pressure medium (2) in the test container (1);
repeating steps iii. to v.

2. Method according to claim 1, **characterised in that** the pressure of the pressure medium (2) in the test container (1) is increased until a substantially complete regression of the elastic deformation of the compressed gas accumulator (3) is measured.

3. Method according to claim 1, **characterised in that** the pressure of the pressure medium (2) in the test container (1) is increased until the pressure of the pressure medium (2) in the test container (1) substantially corresponds to the test pressure of the compressed gas (7) in the compressed gas accumulator (3).

4. Method according to any of claims 1 to 3, **characterised in that** the compressed gas accumulator (3) to be tested in the test container (1) is surrounded on all sides by the pressure medium (2).

5. Method according to any of claims 1 to 4, **characterised in that** the elastic deformation of the compressed gas accumulator (3) is detected with at least one, preferably with at least two, particularly preferably with three, strain gauges on the compressed gas accumulator (3).

6. Method according to any of claims 1 to 5, **characterised in that** a flow volume of the pressure medium (2) flowing into the test container (1) and/or a flow volume of the pressure medium (2) flowing out of the test container (1) is measured to determine a change in volume of the compressed gas accumulator (3) from the inflowing and/or outflowing flow volume of the pressure medium (2).

7. Method according to claim 6, **characterised by** the further steps of:
comparing the change in volume of the compressed gas accumulator (3) with a reference value;
detecting a fault in the compressed gas accumulator (3) when the change in volume of the compressed gas accumulator (3) exceeds the reference value.

8. Method according to any of claims 1 to 7, **characterised in that** the pressure medium (2) is substantially incompressible, the pressure medium used preferably being water, a liquid having a water content of more than 5 percent by volume and less than 100 percent by volume, in particular from 20 percent by volume to 60 percent by volume, or a hydraulic fluid.

9. Method according to any of claims 1 to 8, **characterised in that** the temperature of the compressed gas accumulator (3) is set with a temperature control unit (18).

10. Method according to any of claims 1 to 9, **characterised in that** the test pressure of the compressed gas (7) in the compressed gas accumulator (3) is from 5 bar to 2500 bar, in particular from 500 bar to 1800 bar, in particular from 900 bar to 1500 bar.

## Revendications

1. Procédé pour le test à cycle d'effort d'un accumulateur de gaz sous pression (3) avec les étapes :
i. de disposition de l'accumulateur de gaz sous pression (3) à tester à l'intérieur #
ii. d'augmentation de la pression d'un gaz sous pression (7) dans l'accumulateur de gaz sous pression (3) à une pression de test ;
iii. de mesure d'une déformation élastique du contenant de gaz sous pression (3), laquelle est provoquée par la pression de test du gaz sous pression (7) ;
iv. d'augmentation de la pression d'un milieu sous pression (2) dans le contenant de test (1), de sorte que la déformation élastique du contenant de gaz sous pression (3) est réduite par la pression du milieu sous pression (2) sur le contenant de gaz sous pression (3) ;
v. d'abaissement de la pression du milieu sous pression (2) dans le contenant de test (1) ;
vi. de répétition des étapes iii. à v.

2. Procédé selon la revendication 1, **caractérisé en ce que** la pression du milieu sous pression (2) dans le contenant de test (1) est augmentée jusqu'à ce qu'une régression sensiblement complète de la déformation élastique du contenant de gaz sous pression (3) soit mesurée.

3. Procédé selon la revendication 1, **caractérisé en ce que** la pression du milieu sous pression (2) dans le contenant de test (1) est augmentée jusqu'à ce que la pression du milieu sous pression (2) dans le contenant de test (1) corresponde sensiblement à la pression de test du gaz sous pression (7) dans l'accumulateur de gaz sous pression (3).

4. Procédé selon l'une quelconque des revendications 1 à 3, **caractérisé en ce que** l'accumulateur de gaz sous pression (3) à tester dans le contenant de test (1) est entouré de tous les côtés par le milieu sous pression (2).

5. Procédé selon l'une quelconque des revendications 1 à 4, **caractérisé en ce que** la déformation élastique du contenant de gaz sous pression (3) est détectée avec au moins une, de préférence avec au moins deux, de manière particulièrement préférée avec trois jauges de contrainte sur l'accumulateur de gaz sous pression (3).

6. Procédé selon l'une quelconque des revendications 1 à 5, **caractérisé en ce qu'**un débit volumique du milieu sous pression (2) affluant dans le contenant de test (1) et/ou un débit volumique du milieu sous pression (2) s'écoulant du contenant de test (1) est mesuré, afin de constater une modification de volume de l'accumulateur de gaz sous pression (3) à partie du débit volumique du milieu sous pression (2) destiné à affluer ou à s'écouler.

7. Procédé selon la revendication 6, **caractérisé par** les autres étapes :
- de comparaison de la modification de volume du contenant de gaz sous pression (3) avec une valeur de référence ;
- de constatation d'un défaut du contenant de gaz sous pression (3), lorsque la modification de volume du contenant de gaz sous pression (3) dépasse la valeur de référence.

8. Procédé selon l'une quelconque des revendications 1 à 7, **caractérisé en ce que** le milieu sous pression (2) est sensiblement incompressible, dans lequel de préférence de l'eau, un liquide avec une teneur en eau de plus de 5 pour cent en volume et de moins de 100 pour cent en volume, en particulier de 20 pour cent en volume à 60 pour cent en volume, ou un liquide hydraulique est utilisé comme milieu sous pression.

9. Procédé selon l'une quelconque des revendications 1 à 8, **caractérisé en ce que** la température du contenant de gaz sous pression (3) est réglée avec une unité de thermorégulation (18).

10. Procédé selon l'une quelconque des revendications 1 à 9, **caractérisé en ce que** la pression de test du gaz sous pression (7) dans le contenant de gaz sous pression (3) atteint de 5 bar à 2 500 bar, en particulier de 500 bar à 1 800 bar, en particulier de 900 bar à 1 500 bar.
